# EUROPEAN PATENT APPLICATION

(11) **EP 4 579 706 A1**
(43) Date of publication of application: **02.07.2025**
(21) Application number: 23865616.9
(22) Date of filing: 15.09.2023
(51) Int. Cl.: H01G 9/055, H01G 9/00, H01G 9/048, H01G 9/14, H01G 9/15

(54) **SOLID ELECTROLYTIC CAPACITOR AND PRODUCTION METHOD**

(30) Priority: 16.09.2022 JP 2022148259
(71) Applicant: Nippon Chemi-Con Corporation, Tokyo 141-8605 (JP)
(72) Inventor: OSUGA, Yuki, Tokyo 141-8605 (JP); MAKINO, Takeshi, Tokyo 141-8605 (JP)
(74) Representative: AWA Sweden AB
(86) International application number: PCT/JP2023/033684
(87) International publication number: WO 2024/058267

(57) **Abstract**

A solid electrolytic capacitor with low ESR even when a conductive layer is formed on cathode foil, and the manufacturing method thereof are provided. The solid electrolytic capacitor includes an anode body having dielectric film, a cathode body, and an electrolyte layer intervening between the anode body and the cathode body. The cathode body includes cathode foil formed of valve action metal and a conductive layer formed a on the cathode foil. The electrolyte layer includes a conductive polymer and contacts at least the conductive layer. The foil capacity of the cathode foil is 20 µF/cm² or more.

## Description

### FIELD OF INVENTION

The present disclosure relates to a solid electrolytic capacitor and a manufacturing method thereof, that contains conductive polymers in an electrolyte and that gains the capacitance by the dielectric polarization of dielectric oxide film, and stores and discharges electric charge.

### BACKGROUND

A solid electrolytic capacitor is a passive element that stores and discharges electric charge according to capacitance. The solid electrolytic capacitor includes valve action metal, such as tantalum or aluminum, as an anode body and a cathode body. Dielectric film is formed on a surface of the anode body. An electrolyte layer intervenes between the anode body and the cathode body. The electrolyte layer adheres to at least the dielectric film of the anode body and acts as a true electrode.

Conductive polymers may be used as a solid electrolyte. The solid electrolyte capacitor including the conductive polymer as the electrolyte has properties such as small size, large capacity, low equivalent series resistance, easy to chip, and suitable for surface mount. Therefore, the solid electrolytic capacitor including the conductive polymer as the electrolyte is essential for downsizing, higher functionality, and cost reduction of electronic devices. In recent years, poly(3,4-ethylenedioxythiophene) (PEDOT), which has excellent adhesion to the dielectric film and can improve the capacitance, is largely used as the conductive polymer.

Here, the solid electrolytic capacitor is regarded as a capacitor in which the capacitance of the anode body and the capacitance of the cathode body are connected in series. In this case, by asymptoting the capacitance of the cathode body to infinity, the capacitance of the solid electrolytic capacitor becomes equal to the capacitance of the anode body, so that the capacitance of the solid electrolytic capacitor is further improved. Accordingly, there is a technical proposal in which a metal nitride layer is formed on a surface of cathode foil by vapor-depositing metal nitrides on the surface of cathode foil to conduct the metal nitrides and the valve action metal of the cathode foil (for example, refer Patent Document 1).

Note that, since the surface area of the metal film can be enlarged by forming fine unevenness on the metal film to obtain large capacitance, it has been proposed to form the metal film by vapor-deposition on the surface of the cathode foil instead of etching the cathode foil (for example, refer Patent Document 2).

However, in recent years, it has been proposed to use both of etching pits and an inorganic conductive layer in the solid electrolytic capacitor using both of conductive polymer and electrolytic solution as the electrolyte (for example, refer Patent Document 3). When forming the inorganic conductive layer to reach inside the etching pits of the cathode foil, unevenness is also formed on a surface of the inorganic conductive layer along the unevenness of the cathode foil. The convexities of the inorganic conductive layer contacts the conductive polymer and suppresses the electrolytic solution from entering. The electrolytic solution seeps into the concavities of the inorganic conductive layer. As a result, the ESR of the solid electrolytic capacitor decreases by suppressing the decrease in adhesion between the conductive polymer and the inorganic conductive layer and suppressing the increase in the interface resistance.

### PRIOR ART DOCUMENT

### PATENT DOCUMENT

Patent Document 1: JP2000-114109A
Patent Document 2: JP S59-167009A
Patent Document 3: WO2016/174806 A1

### SUMMARY OF INVENTION

### PROBLEMS TO BE SOLVED BY INVENTION

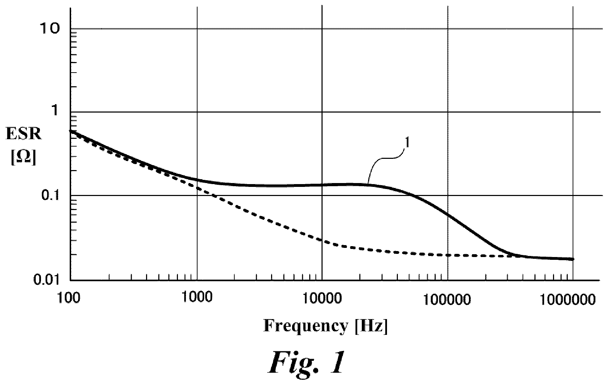

Fig. 1 is a logarithmic graph indicating the relationship between the ESR and the frequency. As indicated by the dotted line in the logarithmic graph of Fig. 1, ideally, the ESR in the capacitive region before the self-resonant frequency decreases slowly as the frequency increases. The decrease in ESR relative to the frequency slow down at higher frequency band. The relationship between the ESR and the frequency flattens by the self-resonant frequency.

However, if a conductive layer is formed on the cathode foil and the conductive polymer of the electrolyte layer is attached to the conductive layer, the relationship between the ESR and the frequency changes, and a bump region 1 is produced as indicated by the solid line in the logarithmic graph. The decrease in ESR relative to the frequency slows down at the frequency band of 1 kHz or more. Also, the relationship between the ESR and the frequency becomes close to flat at the frequency band far lower than the self-resonant frequency. After this substantially-flat region, the decrease in ESR relative to the frequency steepens, and the decrease in ESR relative to the frequency slows down and flattens by the self-resonant frequency again.

This region where the decrease in the ESR relative to the frequency slows down once so that the relationship between the ESR and the frequency becomes close to flat, and steepens again is the bump region 1. The bump region 1 significantly appears when various condition is added in the premise that the conductive layer and the conductive polymer is present on the cathode foil.

The present disclosure has been proposed to address the above problems, and an objective is to provide a solid electrolytic capacitor with low ESR even when a conductive layer is formed on cathode foil, and the manufacturing method thereof.

### MEANS TO SOLVE THE PROBLEM

As a result of keen research, the inventors have found that a resistance Rp is produced in the cathode body when the conductive layer and the conductive polymer contact with each other, and theoretically, this resistance Rp produces the bump region 1 in the relationship between the ESR and the frequency, increasing the ESR in the capacitive region including the 100 kHz band except below 1 kHz. As a result of further keen research, the inventors have found that by generating capacitance Cp in parallel with the resistance Rp, the bump region 1 decreases, and in particular, when the capacitance Cp is 20 µF/cm² or more, the decrease in the bump region 1 affects the 100 kHz band to reduce the ESR.

Accordingly, to address the above problem, a solid electrolytic capacitor of the present embodiment is based on this discovery, and includes: an anode body formed of valve action metal and having dielectric film; a cathode body including cathode foil formed of valve action metal and a conductive layer formed on the cathode foil; and an electrolyte layer intervening between the anode body and the cathode body and including a conductive polymer which contacts to at least the conductive layer, in which the cathode foil has foil capacity of 20 µF/cm² or more.

The cathode foil may have an etching layer formed by etching pits and a dielectric film formed on a surface of the cathode foil. Foil capacity of the cathode foil may be 20 µF/cm² or more in accordance with an enlargement ratio of the cathode foil by the etching layer, and thickness of the dielectric film.

All or a part of the etching pits may have a region where the conductive layer does not contact at a deep portion thereof. In the region where the conductive layer does not contact, the conductive polymer and the cathode foil may contact instead. Meanwhile, as a result of keen research, the inventors have found that when the conductive polymer and the conductive layer of the cathode body is present and there is the uncontacted region, the bump region 1 in the relationship between the ESR and the frequency increases and becomes significant. Then, when the foil capacity of the cathode foil is 20 µF/cm² in the presence of the uncontacted region, the decrease in the bump region 1 effectively affects the 100 kHz band and the ESR significantly decreases.

The conductive layer may be at least a vapor-deposited layer contacting the cathode foil. By making the conductive layer to be the vapor-deposited layer, the region that does not contact the conductive layer is easily produced in all or a part of the deep portion of the etching pits.

The conductive layer may contain titanium carbide. The combination of the conductive layer containing titanium carbide and the cathode foil with the foil capacity of 20 µF/cm² largely reduces the ESR.

The electrolyte layer may be formed so that solution of the conductive polymer or the conductive polymer in dispersion is attached thereto. As a result of keen research, the inventors have found that when the conductive polymer and the conductive layer of the cathode body is present and the conductive polymer is attached using the solution or dispersion of the conductive polymer, the bump region 1 in the relationship between the ESR and the frequency increases and becomes significant. Then, when the foil capacity of the cathode foil is 20 µF/cm² in the presence of the uncontacted region, the decrease in the bump region 1 effectively affects the 100 kHz band and the ESR significantly decreases.

The cathode foil may have the foil capacity of 250 µF/cm². Furthermore, when the enlargement ratio of the etching layer is such that the foil capacity of the 500 µF/cm2 is produced, the risk the increase in the ESR due to the weakening of the cathode foil offsetting the decrease in the bump region 1 is reduced.

The electrolyte layer may include electrolytic solution. When the electrolytic solution is present, the bump region 1 is smaller than when the electrolytic solution is not present, and by making the foil capacity of the cathode foil to be 20 µF/cm², low ESR can be easily achieved.

The electrolytic solution may contain ethylene glycol of 25 wt% or more relative to a total solvent of said electrolytic solution.

The solvent of the electrolytic solution may be formed by both γ-butyrolactone and sulfolane.

Furthermore, to address the above problems, a manufacturing method of a solid electrolytic capacitor of the present embodiment includes: a cathode body formation process of forming a cathode body by forming a conductive layer on cathode foil formed of valve action metal and with foil capacity of 20 µF/cm² and an electrolyte layer formation process of forming an electrolyte layer intervening between an anode body having dielectric film and the cathode body, and including a conductive polymer which contacts to at least the conductive layer.

### EFFECT OF INVENTION

According to the present disclosure, the ESR of the solid electrolytic capacitor with the cathode body on which the conductive layer is formed can be suppressed low.

### BRIEF DESCRIPTION OF DRAWINGS

Fig. 1 is a logarithmic graph indicating the relationship between the ESR and the frequency.
Fig. 2 is a schematic diagram illustrating a cross-section of the cathode body.
Fig. 3 is a logarithmic graph indicating the actual measurement result of the relationship between the ESR and the frequency in the examples 2 and 5**.**
Fig. 4 is a graph indicating the relationship between the foil capacity of the cathode foil and the ESR in which the conductive layer is TiC series or TiN series.

### EMBODIMENTS

Hereinafter, embodiments of an electrode foil and an electrolytic capacitor according to the present disclosure will be described in detail. Note that the present disclosure is not limited to the following embodiments.

### (Overall Configuration)

A solid electrolytic capacitor is a passive element that gains the capacitance by the dielectric polarization of dielectric film and stores and discharges electric charge. The solid electrolytic capacitor includes an anode body in which dielectric film is formed on a surface thereof, and a cathode body. The anode body and the cathode body are arranged to face each other. A separator is intervened between the anode body and the cathode body to prevent short-circuit of the anode body and the cathode body. The anode body and the cathode body have a strip foil shape, for example, and are wound so that they are rounded in the strip longitudinal direction via the separator.

An electrolyte layer adheres to at least a part of the dielectric film of the anode body and intervenes between the anode body and the cathode body. The electrolyte layer includes conductive polymers. The conductive polymer is a self-doped conjugated polymer doped by intramolecular dopants or a conjugated polymer doped by external dopant molecules. Since the conductive polymer is arranged in series between the dielectric film and the cathode body, the capacitance at the anode side is produced by the anode body, the dielectric film, and the conductive polymer.

### (Conductive Polymer)

The conjugated polymer is obtained by chemical oxidative polymerization or electrolytic oxidative polymerization of monomers with a n-conjugated double bond or derivatives thereof. Known polymers may be used for the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used in single or in combination of two or more, and may further be a copolymer of two or more types of monomers.

Among the above-described conjugated polymers, conjugated polymers formed by polymerizing thiophene or derivatives thereof are preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be compounds selected from thiophene with substituents at 3-position and 4-position, and the 3-position and 4-position substituents of the thiophene ring may form a ring together with the 3-position and 4-position carbon. It is preferable that the carbon number of an alkyl group and an alkoxy group is 1 to 16.

In particular, a polymer of 3,4-ethylenedioxythiophene which is called EDOT, that is, poly(3,4-ethylenedioxythiophene) which is called PEDOT is preferable. Furthermore, substituents may be added to 3,4-ethylenedioxythiophene. For example, alkylated ethylenedioxythiophene to which an alkyl group with carbon number of 1 to 5 is added as a substituent may be used. For example, alkylated ethylenedioxythiophene may be methylated ethylenedioxythiophene (that is, 2-methyl-2,3-dihydro-thieno[3,4-b][1,4]dioxin), ethylated ethylenedioxythiophene (that is, 2-ethyl-2,3-dihydro-thieno[3,4-b][1,4]dioxin), butylated ethylenedioxythiophene (that is, 2-butyl-2,3-dihydro-thieno[3,4-b][1,4]dioxin), and 2-alkyl-3,4-ethylenedioxythiophene may be used.

The dopant or the external dopant molecule is an acceptor that easily accepts electrons in the conjugated polymer or a donor that easily donates electrons to the conjugated polymer, so that the conductive polymer exhibits high conductivity. As a dopant, known dopants may be used without limitation. The dopant may be used in single or in combination of two or more. Also, the dopant may be polymers or monomers.

For example, the dopant may be inorganic acid such as polyanions, boric acid, nitric acid, and phosphoric acid, and organic acid such as acetic acid, oxalic acid, citric acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid.

For example, the polyanion may be polymers consisting of only component units with anion groups or polymers consisting of component units with anion groups and component units without anion groups, and may be substituted or unsubstituted polyalkylene, substituted or unsubstituted polyalkenylene, substituted or unsubstituted polyimide, substituted or unsubstituted polyamide, and substituted or unsubstituted polyester. In particular, the polyanion may be polyvinyl sulfonic acid, polystyrene sulfonic acid, polyaryl sulfonic acid, polyacrylic sulfonic acid, polymethacrylic sulfonic acid, poly(2-acrylamide-2-methylpropane sulfonic acid), polyisoprene sulfonic acid, polyacrylic acid, polymethacrylic acid, and polymaleic acid, etc.

### (Cathode Body)

The conductive polymer also contacts the cathode body. Here, the cathode body includes cathode foil and a conductive layer. The conductive layer is laminated on one surface or both surface of the cathode foil and is located at the outermost surface of the cathode body. When the conductive polymer and the conductive layer of the cathode body contacts with each other, the resistance Rp is produced at the cathode-body side. It is assumed that this resistance Rp is the contact resistance between the conductive polymer and the conductive layer, the volume resistance, and the contact resistance between the conductive layer and the cathode foil, but it is not limited thereto. The resistance Rp of the cathode body produces a bump region 1 in the relationship between the ESR and the frequency. That is, the ESR is increased in the capacitive region including the 100 kHz band except below 1 kHz.

However, when the capacitance Cp is produced together with this resistance Rp, the bump in the bump region 1 can be suppressed. Therefore, the capacitance Cp is also produced at the cathode-body side. However, the capacitance Cp at the cathode-body side is not asymptoted to infinity, and the capacitance of the solid electrolytic capacitor is the synthesized capacitance of the anode side and the cathode side.

To produce the capacitance Cp in the cathode body, a surface of the cathode foil is enlarged by an etching layer formed by many pits and the dielectric film is formed thereon. This cathode foil is a long foil body formed of elongated valve action metal. The valve action metal is aluminum, tantalum, niobium, niobium oxide, titanium, hafnium, zirconium, zinc, tungsten, bismuth, and antimony, etc. The purity of the cathode body is desirably 99% or more, and impurities such as silicon, iron, copper, magnesium, and zinc may be included.

The etching layer is formed by tunnel-shaped pits or spongy pits. The tunnel-shaped etching pits are holes dug in the thickness direction of the foil. The tunnel-shaped pits may be formed in a length that penetrates through the foil or a length that does not reach the center of the foil. Typically, the tunnel-shaped etching pits are formed by applying DC current on the anode body in aqueous acidic solution in which halogen ions are present, such as hydrochloric acid. Furthermore, the tunnel-shaped etching pits are enlarged by applying DC current on the cathode body in aqueous acidic solution such as nitric acid. The spongy pits make an enlarged surface layer a spongy layer with a series of fine spatial air gaps. The spongy etching pits are formed by applying AC current on the cathode body in aqueous acidic solution in which halogen ions are present, such as hydrochloric acid.

The dielectric film is formed on the uneven surface of the etching layer. Typically, the dielectric film is oxide film formed on the uneven surface layer of the enlarged surface layer, and for example, when the cathode foil is formed of aluminum, it is an aluminum oxide layer obtained by oxidizing the uneven surface layer of the enlarged surface layer. In the chemical conversion treatment to form the dielectric film, voltage is applied on the cathode foil in chemical conversion solution. The chemical conversion solution is solution without halogen ions, and for example is phosphoric acid-based chemical conversion solution such as ammonium diphosphate, boric acid-based chemical conversion solution such as ammonium borate, and adipic acid-based chemical conversion solution such as ammonium adipate, etc.

Alternatively, the dielectric film is oxide particles other than the cathode foil, and may be formed on the uneven surface of the etching layer using vapor phase deposition method or liquid phase deposition method. The vapor phase deposition method may be chemical vapor deposition (CVD) and physical vapor deposition (PVD), and the liquid phase deposition method may be plating and coating.

By this, the foil capacity of the cathode foil is 20 µF/cm². The foil capacity is the capacitance of the cathode foil. The foil capacity of the cathode foil is measured by cutting out two test pieces of predefined area from the cathode foil, immersing the test pieces in capacitance measurement solution in a glass measurement tank with the test pieces facing each other, and doubling the value measured using the capacitance meter. For example, the predefined area is 1cm², the capacitance measurement solution is aqueous solution of ammonium adipate at 30°C, the capacitance meter is a LCR meter, and as the measurement condition, the AC amplitude is 0.5 Vms and the measurement frequency is 120 Hz.

To achieve the foil capacity of 20 µF/cm² or more, the enlargement ratio of the surface of the cathode foil by the etching layer is adjusted, and the thickness of the dielectric film is adjusted by the applied voltage. That is, to adjust the foil capacity to according to 20 µF/cm² or more, according to C = εS/d, the surface area is increased by increasing the enlargement ratio to increase the foil capacity, and the dielectric film is made thinner to increase the foil capacity.

Note that natural oxide film formed when the cathode foil is reacted with oxygen in the air may be used instead of the dielectric film, and in this case, the foil capacity is adjusted to 20 µF/cm² or more mainly by the enlargement ratio.

When the foil capacity of the cathode foil becomes 20 µF/cm² or more, the bump of the bump region 1 decreases, and the ESR od the solid electrolytic capacitor in each frequency band decreases. In particular, it is observed that, when the foil capacity of the cathode foil is 20 µF/cm² or more, the ESR in 100 kHz clearly decreases. On the other hand, when the foil capacity of the cathode foil is less than 20 µF/cm², the total reduction of the bump region 1 is small, and the reduction rate of the ESR in high frequency band including the 100 kHz band is low.

As the foil capacity of the cathode foil becomes larger, the bump region starts to disappear from the lower frequency level, and the ESR starts to become lower from the lower frequency level. However, the foil capacity of the cathode foil is preferably 500 µF/cm² or less and is more preferably 250 µF/cm². The bump of the bump region 1 is already corrected to be close to the ideal ESR curve in the foil capacity less than 250 µF/cm², and in particular, the decrease in the ESR is sufficient in the 100 kHz band. On the other hand, if the foil capacity of the cathode foil is more than 500 µF/cm², the etching layer have to be deeper to increase the surface area, and a remained core of the cathode foil becomes thinner. The remained core is where the etching layer does not reach. If the remained core is thin, the strength of the cathode foil decreases. The decrease in the strength of the cathode foil might cause cracks or voids in the cathode foil, and the cracks and voids eliminate the ESR reduction effect due to the removal of the bump region 1**.**

The conductive layer may be formed on this etching layer and the cathode foil on which the dielectric film is formed. The conductive layer should mainly contain inorganic substances or inorganic compounds with conductivity higher than the dielectric film of the cathode foil. Multiple conductive layers may be laminated, or each layer may be a layer containing different types of inorganic compounds. The thickness of the conductive layer is preferably 50 nm or more.

The inorganic substance or inorganic compound contained in the conductive layer should be mainly formed by the inorganic substance or inorganic compound, and may contain organic functional groups, such as a carboxyl group, and mixtures, like carbon black. The inorganic substance and inorganic compound may be titanium, zirconium, tantalum, niobium, and nitrides or carbides thereof, aluminum carbide, carbon material, and composite material or mixture thereof. The carbon material is fibrous carbon, carbon powder, or a mixture thereof.

For example, the carbon powder may be natural plant tissue such as coconut shell, synthetic resin such as phenol, activated carbon made from fossil fuel such as coal, coke, pitch, and the like, carbon black such as Ketjen black, acetylene black, and channel black, carbon nanohorn, amorphous carbon, natural graphite, artificial graphite, graphitized Ketjen black, mesoporous carbon, etc. For example, the fibrous carbon is carbon nanotube or carbon nanofiber, etc. The carbon nanotube may be single-walled carbon nanotube with a single layer of a graphene sheet, or multi-walled carbon nanotube (MWCNT) in which two or more layers of graphene sheets are curled up on a same axis and a tube wall forms multiple layers.

The inorganic substance contained in the conductive layer is preferably titanium carbide which is a carbide of titanium. When the conductive layer containing titanium carbide is formed, if the foil capacity of the cathode foil is less than 20 µF/cm², the entire bump region 1 rather largely expands, and the ESR of the solid electrolytic capacitor becomes large. However, when the conductive layer containing titanium carbide is formed, if the foil capacity of the cathode foil is 20 µF/cm² or more, the bump region 1 is eliminated excellently, and the ESR of the solid electrolytic capacitor largely decreases.

The conductive layers are attached to the cathode foil by application, vapor-deposition, or thermal treatment, etc. In the application method, slurry containing the inorganic substance or inorganic compound, a binder, and a solvent is applied and dried on the cathode foil by slurry casting, doctor blading, or spraying, and the like, and the cathode foil and the conductive layer are adhered by pressing if necessary. The vapor deposition method may be vacuum arc vapor-deposition, sputtering vapor-deposition, or electron beam vapor-deposition. In the thermal treatment, powder of the inorganic substance or inorganic compound is attached to the surface of the cathode foil and is sintered.

In the vacuum arc vapor-deposition, voltage is applied to source material in a vacuum chamber to melt and evaporate the source material, and the evaporated material is reacted with reaction gas, to form film of the source material reacted with the reaction gas on the cathode foil. In the sputtering vapor-deposition, a target is placed, plasma is produced under an environment in which reaction gas is filled, and the source material is beaten out from the target and is reacted with the reaction gas, to form film of the source material reacted with the reaction gas on the cathode foil. In electron beam vapor-deposition, electron beam is irradiated to source material in a vacuum chamber to melt and evaporate the source material, and the evaporated material is reacted with reaction gas, to form film of the source material reacted with the reaction gas on the cathode foil.

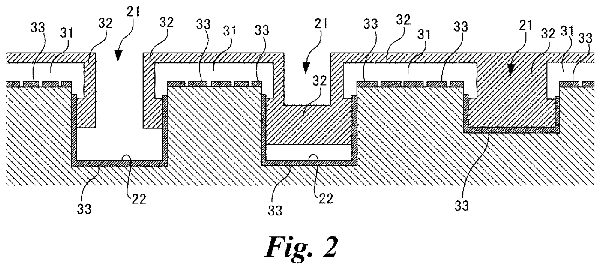

Fig. 2 is a schematic diagram illustrating a cross-section of the cathode body. As illustrated in Fig. 2, it is preferable to produce an uncontacted region 22, which is a region that does not contact a conductive layer region 31 which is a region of the conductive layer, that is, a region that is uncontact, in a deep portion of all or a part of the pits 21 of the etching layer. In the pits 21, cathode-side dielectric film 33 is also formed on the uncontacted region 22. Particles of the conductive polymer enters in the uncontacted region 22 instead of the conductive layer region 31, a conductive polymer region 32, which is a region of the conductive polymer, contacts the cathode-side dielectric film 33.

Therefore, it is preferable to form the conductive layer so that the conductive layer region 31 does not block the pit 21 to enable the conductive polymer and the electrolytic solution to enter the pit 21. Alternatively, it is preferable to form the conductive layer so that the conductive polymer and the electrolytic solution can enter in the pit 21 through the conductive layer region 31 even when the conductive layer region 31 is blocking the opening of the pit 21. For example, the particle diameter or density of the inorganic substance or inorganic compound is adjusted so that pores between the inorganic substance or inorganic compound forming the conductive layer becomes larger than the conductive polymer or the electrolyte.

On the other hand, if the uncontacted region 22 is provided when there is the conductive layer and a solid electrolyte layer contains the conductive polymer, the bump region 1 in the relationship between the ESR and the frequency becomes significant. That is, the decrease in the ESR significantly slows down, and the flat region of the ESR becomes long. However, when the foil capacity of the cathode foil is 20 µF/cm² or more, the elimination of the bump region 1 becomes significant. Therefore, for the solid electrolytic capacitor with the uncontacted region 22, it is preferable that said embodiment includes the cathode foil with the foil capacity of 20 µF/cm² or more.

To provide the uncontacted region 22, it is preferable form the conductive layer based on the vapor-deposition method. However, it is preferable to select the physical vapor-depostion rather than the chemical vapor-deposition, and by selecting the physical vapor-deposition, it becomes difficult for the particles of the inorganic substance or inorganic compound to reach the deep portion of the etching layer. Furthermore, it is preferable to form the etching layer by the spongy pits 21. The spongy pits 21 with complicated pore shapes make the particles of the inorganic substance or inorganic compound further difficult to reach the deep portion of the etching layer. The diameter of the spongy etching pit 21 is preferably equivalent to or smaller than the inorganic substance or inorganic compound and is preferably 1 µm or less. The diameter of the spongy pit 21 is further preferably 50 to 300 nm. This further reduces the possibility for the inorganic substance or inorganic compound to reach the deepest portion of the spongy pit.

Note that if the uncontacted region 22 which is the region that does not contact the conductive layer region 31 can be produced in the deep portion of all or a part of the pits 21 of the etching layer, certain effect can be achieved, and the formation method of the conductive layer is not limited to the vapor-deposition.

### (Manufacturing Method)

Such a solid electrolytic capacitor is manufactured as follows. That is, the anode body and the cathode body are produced by an anode body formation process and a cathode body formation method. respectively. The strip-shaped anode body and cathode body are wound via a separator therebetween to produce a cylindrical wound body formed by the anode foil, the cathode foil, and the separator. In the electrolyte formation process, a capacitor element is produced by attaching the conductive polymer in the wound body. The capacitor element is inserted in a cylindrical outer casing with a bottom, and an opened end of the outer casing is sealed by a crimping process using a sealing body. Then, the aging process is performed to complete the manufacture of the solid electrolytic capacitor.

In an attachment process of the conductive polymer, it is preferable to adjust conductive polymer solution, and impregnate the wound body with the conductive polymer solution. In the solid electrolytic capacitor filled with the conductive polymer by impregnating the conductive polymer solution, the bumped region 1 is significantly produced in the relationship between the ESR and the frequency. Therefore, the suitable embodiment will include the cathode body with the foil capacity of 20 µF/cm² or more.

The conductive polymer solution is liquid in which particles or powder of the conductive polymer is dispersed or dissolved. By impregnating the wound body with the conductive polymer solution and volatilizing at least a part of the solvent by drying, the conductive polymer is attached to the anode body and the cathode body.

The conductive polymer is produced by chemical polymerization or electrolytic polymerization. In the chemical polymerization, solution containing monomers that are monomer units of the conductive polymer and an oxidizing agent are mixed and polymerized. The oxidizing agent may be any known compounds that release dopants, may be trivalent iron salt such as iron (III) p-toluene sulfonate, iron (III) naphthalene sulfonate, and iron (III) anthraquinone sulfonate, or peroxodisulfate salt such as peroxiodisulfuric acid, ammonium peroxodisulfate, and sodium peroxodisulfate, and may be used in single or in combination of two or more. Although there is no strict limitation for the polymerization temperature, the temperature is generally in the range of 10 to 200 °C. The polymerization time is generally in the range of 10 minutes to 30 hours.

In the electrolytic polymerization, monomers that are monomer units of the conductive polymer and a support electrolyte are mixed and polymerized by the constant potential method, the constant current method, or the potential sweep method. The support electrolyte contains at least one type of compound selected from a group consisting of borodisalicylic acid and borodisalicylic acid salt. The salt may be alkali metal salt such as lithium salt, sodium salt, and potassium salt, ammonium salt, alkyl ammonium salt such as ethyl ammonium salt and butyl ammonium salt, dialkyl ammonium salt such as diethyl ammonium salt and dibutyl ammonium salt, trialkyl ammonium salt such as triethyl ammonium salt and tributyl ammonium salt, and tetraalkyl ammonium salt such as tetraethyl ammonium salt and tetrabutyl ammonium salt.

In the constant potential method, potential of 1.0 to 1.5 V is suitable for a reference electrode, in the constant current method, current of 1 to 10000 µA/cm² is suitable, and in the potential sweep method, it is suitable to sweep the range of 0 to 1.5 V for a reference electrode at a rate of 5 to 200 mV/second. Although there is no strict limitation for the polymerization temperature, the temperature is generally in the range of 10 to 60 °C. The polymerization time is generally in the range of 10 minutes to 30 hours.

In the electrolytic polymerization and chemical polymerization, the solvent to add the monomer and the oxidizing agent or the support electrolyte is not particularly limited if the solvent can dissolve the desired amount of the monomers and the support electrolyte and does not affect the electrolytic polymerization. For example, the solvent may be water, methanol, ethanol, isopropanol, butanol, ethylene glycol, acetonitrile, butyronitorile, acetone, methylethylketone, tetrahydrofuran, 1,4-dioxan, γ-butyrolactone, methyl acetate, ethyl acetate, methyl benzoate, ethyl benzoate, ehtylene carbonate, propylene carbonate, nitromethane, nitrobenzene, sulfolane, and dimethyl sulfolane. These solvents may be used in single or in combination of two or more.

After the conductive polymer is prodcued, the conductive polymer solution is prepared by purifying the solution after the chemical polymerization or electrolytic polymerization using ultrafiltration, cation exchange, and anion exchange, removing residual monomers and impurities, and dispersing or dissolving the conductive polymer in the solution.

The solvent of the conductive polymer solution be any solvent if the conductive polymer disperses or dissolves thereto, and water, or the mixture of water and organic solvents is preferable. The organic solvent of the conductive polymer dispersion may be polar solvents, alcohol, esters, hydrocarbon, carbonate compounds, ether compounds, chain ethers, heterocyclic compounds, and nitrile compounds, etc.

The polar solvent may be N-methyl-2-pyrrolidone, N,N-dimethylformamide, N,N-dimethylacetoamide, and dimethylsulfoxide. The alcohol may be methanol, ethanol, propanol, and butanol, etc. The ester may be ethyl acetate, propyl acetate, and butyl acetate, etc. The hydrocarbon may be hexane, heptane, benzene, toluene, and xylene, etc. The carbonate compound may be ethylene carbonate and propylene carbonate, etc. The ether compound may be dioxane, diethylether, etc. The chain ether may be ethylene glycol alkyl ether, propylene glycol alkyl ether, polyethylene glycol dialkyl ether, and polypropylene glycol alkyl ether, etc. The heterocyclic compound may be 3-methyl-2-oxazolidinone, etc. The nitrile compound may be acetonitrile, glutaronitrile, methoxyacetonitrile, propionitrile, and benzonitrile, etc.

The pH of the conductive polymer solution is adjusted, and polyhydric alcohol and various additives may be added as necessary. For example, the pH adjuster may be ammonia water, sodium hydroxide, primary amines, secondary amines, and tertiary amines. The polyhydric alcohol may be sorbitol, ethylene glycol, diethylene glycol, triethylene glycol, polyoxyethylene glycol, glycerin, polyglycerin, polyoxyethylene glycerin, xylitol, erythritol, mannitol, dipentaerythritol, pentaerythritol, or combination of two or more. Since the boiling point of the polyhydric alcohol is high, the polyhydric alcohol remains in the solid electrolyte layer even after the attaching target is impregnated with the conductive polymer solution and is dried, so that ESR reduction and withstand voltage improvement of the electrolytic capacitor are achieved. For example. the additive may be organic binders, surfactant, dispersant, defoamer, coupling agent, antioxidant, and UV absorber, etc.

When the solvent is removed by drying process, for example, the temperature environment in the drying process is 40 to 200 °C, and the drying time is 3 to 180 minutes. The drying process may be repeated for multiple times. The drying process may be performed under the depressurized environment, for example, under the pressure of 5 to 100 kPa. The drying process may be divided into pre-drying and main-drying. The conductive polymer solution may be applied by droplet or by spraying other than the immersion.

Note that the conductive polymer may be formed in the electrolytic capacitor by immersing the wound body in the solution of the monomers that are the monomer units of the conductive polymer and the oxidizing agent or the support electrolyte for polymerization reaction.

The electrolytic solution may be added to the electrolyte layer. The electrolyte layer is formed of the conductive polymer and the electrolytic solution, and the electrolytic solution is filled to fill voids between the dielectric film and the conductive polymer. The electrolytic solution is mixed solution in which a solute is dissolved in a solvent, and additives are added as necessary. The electrolytic solution may only contain the solvent and does not contain the solute, or may be the mixture solution of the solvent and the additive.

The solvent of the electrolytic solution may be a protic organic polar solvent or an aprotic organic polar solvent, and may be used in single or in combination of two or more. Furthermore, the solute of the electrolytic solution contains anion components and cation components. Typically, the solute is organic acid salt, inorganic acid salt, or salt of composite compound of organic acid and inorganic acid, and may be used in single or in combination of two or more. Acid that is the anion and base that is the cation may be separately added to the solvent.

The protic organic polar solvent that is the solvent may be monohydric alcohol, polyhydric alcohol, and oxyalcohol compound, etc. The monohydric alcohol may be ethanol, propanol, butanol, pentanol, hexanol, cyclobutanol, cyclopentanol, cyclohexanol, and benzyl alcohol, etc. The polyhydric alcohol and the oxyalcohol compound may be ethylene glycol, propylene glycol, glycerin, polyglycerin, methyl cellosolve, ethyl cellosolve, methoxypropylene glycol, dimethoxypropanol, and alkylene oxide adducts of polyhydric alcohol such as polyethylene glycol and polyoxyethylene glycerin, etc.

The aprotic organic polar solvent that is the solvent may be sulfones, amides, lactones, cyclic amides, nitriles, and sulfoxides, etc. The sulfone may be dimethyl sulfone, ethylmethyl sulfone, diethyl sulfone, sulfolane, 3-methyl sulfolane, and 2,4-dimethyl sulfolane, etc. The amide may be N-methylformamide, N,N-dimethylformamide, N-ethylformamide, N,N-diethylformamide, N-methylacetamide, N,N-dimethylacetamide, N-ethylacetamide, N,N-diethylacetamide, and hexamethylphosphoricamide, etc. The lactone and the cyclic amide may be γ-butyrolactone, γ-valerolactone, δ-valerolactone, N-methyl-2-pyrrolidone, ethylene carbonate, propylene carbonate, butylene carbonate, and isobutylene carbonate, etc. The nitrile may be acetonitrile, 3-methoxypropionitrile, and glutaronitrile, etc. The sulfoxide may be dimethyl sulfoxide, etc.

Among them, the solvent is preferably ethylene glycol and glycerin. Ethylene glycol and glycerin cause a change in the high-order structure of the conductive polymer, and the conductive polymer has the excellent initial ESR property and excellent high-temperature property. In particular, due to the change in the high-order structure of the conductive polymer in the pits of the cathode foil and the conductive polymer near the conductive layer, the adhesion of the conductive polymer and the conductive layer is improved and the capacity drawing effect of the cathode foil is improved, resulting in the excellent initial ESR property. It is further preferable that ethylene glycol is present in the solvent in an amount of 25 wt% or more. If ethylene glycol is present in the solvent in an amount of 25 wt% or more, the solvent may contain other solvents such as γ-butyrolactone or sulfolane.

When γ-butyrolactone or sulfolane is used as the solvent, it is preferable to form the solvent with γ-butyrolactone and sulfolane, rather than forming the solvent only with γ-butyrolactone or sulfolane. By forming the solvent with γ-butyrolactone and sulfolane rather than forming the solvent only with γ-butyrolactone or sulfolane, the ESR of the solid electrolytic capacitor is reduced.

The organic acid that becomes the anion component as the solute may be carboxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acids, malonic acids, 1,6-decandicarboxylic acid, 1,7-octanedicarboxylic acid, azelaic acid, undecanedioic acid, dodecanedioic acid, tridecanedioic acid, t-butyladipic acid, 11-vinyl-8-octadecenedioic acid, resolcinic acid, fluorochloric acid, gallic acid, gentisic acid, protocatechuic acid, pyrocatechuic acid, trimellitic acid, and pyromellitic acid, phenols, and sulfonic acid, etc.

The inorganic acid may be boric acid, phosphoric acid, phosphorus acid, hypophosphorous acid, carbonic acid, and silicic acid, etc. The composite compound of organic acid and inorganic acid may be borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartric acid, borodicitric acid, borodiphthalic acid, borodi(2-hydroxy) isobutyric acid, borodiresorcinic acid, borodimethylsalicylic acid, borodinaftoeic acid, borodimandelic acid, and borodi(3-hydroxy) propionic acid, etc.

Furthermore, at least one salt of the organic acid, the inorganic acid, and the composite compound of organic acid and inorganic acid may be ammonium salt, quaternary ammonium salt, quaternary amidinium salt, amine salt, sodium salt, and potassium salt, etc. Quaternary ammonium ions of the quaternary ammonium salt may be tetramethylammonium, triethylmethylammonium, and tetraethylammonium, etc. The quaternary amidinium salt may be ethyldimethylimidazolinium and tetramethylimidazolinium, etc. The amine salt may be primary amines, secondary amines, and tertiary amines. The primary amine may be methylamine, ethylamine, propylamine, and the like, the secondary amines may be dimethylamine, diethylamine, ethylmethylamine and dibutylamine, and the like, and the tertiary amines may be trimethylamine, triethylamine, tributylamine, ethyldimethylamine, ethyldiisopropylamine, and the like.

Furthermore, other additives may be added to the electrolytic solution. The additives may be alkylene oxide adducts of polyhydric alcohol such as polyethylene glycol and polyoxyglycerin, complex compounds of boric acid and polysaccharides (mannit, sorbit, etc.), complex compounds of boric acid and polyhydric alcohol, borate esters, nitro compounds (o-nitrobenzoic acid, m-nitrobenzoic acid, p-nitrobenzoic acid, o-nitrophenol, m-nitrophenol, p-nitrophenol, p-nitrobenzylalcohol etc.), and phosphate esters, etc. These may be used in single or in combination of two or more. The addition amount of the additive is not particularly limited, but is preferably added in an amount that does not give adverse effect the properties of the solid electrolytic capacitor, such as 30 wt% or less of the electrolytic solution.

In such solid electrolytic capacitors, the anode body is an elongated foil body formed of valve action metal, and the purity thereof is desirably 99.9 % or more. An enlarged surface layer is formed on one or both surface of the foil of the anode body. The enlarged surface layer may be a sintered layer in which powder of valve action metal is sintered or a vapor-deposited layer in which particles of valve action metal are vapor-deposited, other than the etching layer. The sintering and vapor-deposition method may be atomic layer deposition, vapor-deposition, and powder sintering lamination modeling. That is, the enlarged surface layer may be a porous structure formed by voids between dense powder bodies or particles, other than tunnel-shaped pits or spongy pits. The dielectric film is formed on the uneven surface of the enlarged surface layer of the anode body by chemical conversion treatment, vapor phase deposition method or liquid phase deposition method.

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in mixture. However, the separator may be excluded if short-circuit between the anode body and the cathode body is prevented and the conductive polymer and the electrolytic solution is held.

The solid electrolytic capacitor may be a laminated type in which the electrolyte layer and the cathode body are laminated on cathode body in a flat plate. In the laminated-type, other than a planar-type in which an exterior is omitted, for example, a capacitor element is sealed by covering the capacitor element by laminate film or by molding, dip coating, or printing resin such as heat-resistant resin and insulation resin.

### (Action and Effect)

Ideally, the ESR in the capacitive region before the self-resonant frequency decreases slowly as the frequency increases. The decrease in the ESR relative to the frequency slows down at higher frequency band. The relationship between the ESR and the frequency flattens by the self-resonant frequency.

However, if the conductive layer is formed on the cathode foil and the conductive polymer of the electrolyte layer is attached to the conductive layer, the relationship between the ESR and the frequency changes, and the bump region 1 is produced. The decrease in the ESR relative to the frequency slows down at the frequency band of 1 kHz or more. Also, the relationship between the ESR and the frequency becomes close to flat at the frequency band far lower than the self-resonant frequency. After this substantially-flat region, the decrease in ESR relative to the frequency steepens, and the decrease in ESR relative to the frequency slows down and flattens by the self-resonant frequency again.

This region where the decrease in the ESR relative to the frequency slows down once so that the relationship between the ESR and the frequency becomes close to flat, and steepens again is the bump region 1. The bump region 1 significantly appears when the uncontacted region 22 which is a region where the conductive layer and the deep portion of all or a part of the etching pits do not contact with each other. That is, the decrease in the ESR significantly slows down, and the flat region of the ESR becomes long. Furthermore, the bump region 1 significantly appears when the electrolyte layer of the conductive polymer is formed using the conductive polymer solution. Furthermore, the bump region 1 significantly appears in the solid electrolytic capacitor that does not use the electrolytic solution.

Next, in the logarithmic graph, the magnitude 1/(2πfCp)[ |Zp|] of the impedance of the cathode foil in the capacitive region before the self-resonant frequency decreases in proportion to the frequency. Then, when the resistance Rp > |Zp|, the decrease in the ESR which has slowed down due to the occurrence of the bump region 1 can be made larger. That is, the bump region 1 can be eliminated. Accordingly, the ESR till the self-resonant frequency can be entirely reduced.

When the magnitude |Zp| = 1/(2πfCp) and the foil capacity Cp of the cathode foil is made larger, the logarithmic graph indicating the relationship between the magnitude of the impedance and the frequency moves in parallel in the direction that reduces the overall impedance, and the frequency that achieves the resistance Rp > |Zp| becomes smaller. At the frequency of 100 kHz, the ESR reduction effect due to the foil capacity Cp of the cathode foil in parallel with the resistance Rp significantly appears at 20 µF/cm² or more.

Hereinafter, the solid electrolytic capacitor will be described in more detail based on the examples. Note that the present disclosure is not limited to the below examples.

### (Examples 1 to 5)

Solid electrolytic capacitors of examples 1 to 5, the comparative example 1, and reference examples 1 to 2 were manufactured as follows.

Anode foil was elongated strip-shaped aluminum foil with the thickness of 110 µm. Surfaces of the anode foil were enlarged by AC etching. In the formation of the enlarged surface layer of the anode foil, AC current was applied to the aluminum foil in aqueous solution containing hydrochloric acid to form spongy etching pits. Chemical conversion treatment was performed on the anode body to form dielectric film on the surface of the anode foil.

Cathode foil was elongated strip-shaped aluminum foil with the thickness of 50 µm. The etching layer was also formed on the cathode foil and the dielectric film was formed on an uneven surface of the etching layer, to achieve the foil capacity of 10 to 250 µF/cm² in accordance with each solid electrolytic capacitor. AC current was applied to the aluminum foil in aqueous solution containing hydrochloric acid to form the etching layer formed by the spongy etching pits. Titanium carbide TiC was laminated as the conductive layer on each cathode foil. TiC with the thickness of 110 nm was laminated on the cathode foil by vacuum arc vapor-deposition. Furthermore, TiC was laminated such that an uncontacted region 22 is formed in the deep portion of the pits 21.

In the AC etching process of the cathode foil, the cathode foil was immersed in acidic aqueous solution with hydrochloric acid as the main electrolyte to enlarge both surfaces of the aluminum foil. Next, in the chemical conversion treatment of the cathode foil, after chlorine attached in the AC etching process was removed using phosphoric acid aqueous solution, voltage in accordance with the thickness of the dielectric film was applied in aqueous solution of ammonium dihydrogenphosphate. The foil capacity Cp of the desired value was obtained by repeatedly adjusting the surface enlargement ratio of the etching layer and the thickness of the dielectric film based on the theoretical formula Cp = εS/d.

The anode body and the cathode body were laminated via a separator with the strip direction of the bodies being the same, and were wound so that the strip-longitudinal direction of the bodies were rounded, forming the wound body. The separators in the examples 1 to 5 and the comparative example 1 were manila-hemp based. The separators in the reference examples 1 and 2 were special nylon fiber. Current with current with current density of 2.5 mA/cm² was conducted to the produced wound body in aqueous solution of ammonium dihydrogenphosphate with temperature of 90 °C, and was maintained for 15 minutes after the chemical conversion voltage reached 56 V.

The wound bodies of the examples 1 to 5 and the comparative example 1 were impregnated with the conductive polymer solution to attach the conductive polymer. In the conductive polymer solution, poly(3,4-ethylenedioxythiphene) doped with polystyrene sulfonic acid (PSS) (PEDOT/PSS) was dispersed in water. PEDOT/PSS was added in a ratio of 1.2 wt% relative to the total conductive polymer solution. Ethylene glycol was added to the conductive polymer solution in a ratio of 10 wt% relative to the total conductive polymer solution. The wound body was impregnated with the conductive polymer solution for 5 minutes in the pressurized environment at room temperature. The impregnation process was performed twice. After each impregnation process, the wound body was placed still in the temperature environment of 150 °C for 30 minutes to dry the wound body.

The conductive polymer produced by chemical polymerization was attached to the wound bodies of the reference examples 1 and 2. The wound body was immersed in the mixture solution to which monomers of 3,4-ethylenedioxythiophene and iron (III) p-toluenesulfonate as an oxidant that releases dopants were added, to cause the polymerization reaction. The polymerization temperature was 150 °C, and the polymerization time was 30 minutes.

In the examples 1 to 5 and the comparative example 1, the wound body on which the conductive polymer was attached was further impregnated with the electrolytic solution. The electrolytic solution was prepared by adding ammonium azelaate to ethylene glycol. The electrolytic solution was not used together in the solid electrolytic capacitors of the reference examples 1 and 2.

Each produced capacitor element was housed in an cylindrical outer casing, and an opening of the outer casing was sealed with a sealing body. Voltage was applied on each solid electrolytic capacitor to perform aging process. By this, as the examples 1 to 5 and the comparative example 1, the solid electrolytic capacitors with diameter of 6.3 mm, height of 6.1 mm, rated voltage of 35 WV, and rated capacity of 56 µF were produced. Also, as the reference examples 1 and 2, the solid electrolytic capacitors with rated voltage of 25 WV, and rated capacity of 47 µF were produced.

### (ESR measurement)

The ESR of the examples 1 to 5, the comparative example 1, and the reference examples 1 and 2 was measured. The ESR was measured by connecting terminals of the LCR meter to the anode body and the cathode body with ambient temperature of 20 °C and measurement frequency of 100 kHz as the measurement condition. The results are shown in the below table 1. The measurement result of the ESR are shown in the below table 1 with the foil capacity of each cathode foil. Note that, two test pieces of predefined area were cut out from the cathode foil and were immersed in capacitance measurement solution in a glass measurement tank with the pieces facing each other, and the foil capacity of each cathode foil were obtained by doubling the value measured using the capacitance meter. The predefined area was 1cm², the capacitance measurement solution was aqueous solution of ammonium adipate at 30 ° C, the capacitance meter was a LCR meter, and as the measurement condition, the AC amplitude was 0.5 Vms and the measurement frequency was 120 Hz.

**[Table 1]**

| | **Conductive Layer** | **Attachment of Conductive Polymer** | **Electrolytic Solution** | **Foil Capacity of Cathode Foil [µF/cm²]** | **100kHz ESR [Ω]** |
|---|---|---|---|---|---|
| **Example 1** | **TiC** | **Impregnation of Conductive Polymer Solution** | **Present** | **250** | **0.024** |
| **Example 2** | | | | **150** | **0.024** |
| **Example 3** | | | | **50** | **0.024** |
| **Example 4** | | | | **40** | **0.025** |
| **Example 5** | | | | **20** | **0.033** |
| **Comparative Example 1** | | | | **10** | **0.055** |
| **Reference Example 1** | | **Chemical Polymerization** | **Absent** | **40** | **0.017** |
| **Reference Example 2** | | | | **20** | **0.017** |

As shown in the table 1, the ESR of the solid electrolytic capacitors of the examples 1 to 5 was suppressed lower than that of the comparative example 1. The foil capacity of the cathode foil of the solid electrolytic capacitors of the examples 1 to 5 was 20 µF/cm² or more. In particular, when the foil capacity of the cathode foil was 40 µF/cm² to 250 µF/cm², the ESR was decreased to a minimum. Furthermore, comparing the examples and the reference examples, it was observed that the ESR reduction effect by making the foil capacity of the cathode foil to be 20 µF/cm² or more was significant in the solid electrolytic capacitor to which the conductive polymer had been attached using the conductive polymer solution.

### (Examples 6 and 7)

The solid electrolytic capacitors of the examples 6 and 7 were produced as follows. The examples 6 and 7 were different from the examples 1 to 5 in that the electrolytic solution was used not together. The solid electrolytic capacitors of the examples 6 and 7 were produced with the same structure, the same composition, the same manufacturing method, and the same condition as that of the example, except that the electrolytic solution was not used together. The foil capacity of the cathode foil of the example 6 was 150 µF/cm², and the foil capacity of the example 7 was 20 µF/cm².

### (ESR measurement)

The ESR of the examples 6 and 7 was measured. The measurement method and the measured condition of the ESR was the same as the example 1. The measurement result of the ESR are shown in the below table 2 with the foil capacity of each cathode foil.

**[Table 2]**

| | **Conductive Layer** | **Attachment of Conductive Polymer** | **Electrolytic Solution** | **Foil Capacity of Cathode Foil [µF/cm²]** | **100kHz ESR [Ω]** |
|---|---|---|---|---|---|
| **Example 6** | **TiC** | **Impregnation of Conductive Polymer Solution** | **Absent** | **150** | **0.037** |
| **Example 7** | | | | **20** | **0.069** |

As shown in the table 2, also in the solid electrolytic capacitors of the examples 6 and 7 without the electrolytic solution, it was observed that the ESR was changed to decrease by increasing the foil capacity of the cathode foil in the range above 20 µF/cm² or more. Furthermore, as shown in the tables 1 and 2, it was observed that the ESR was entirely low when the electrolytic solution had been used together.

### (Relationship between ESR and Frequency)

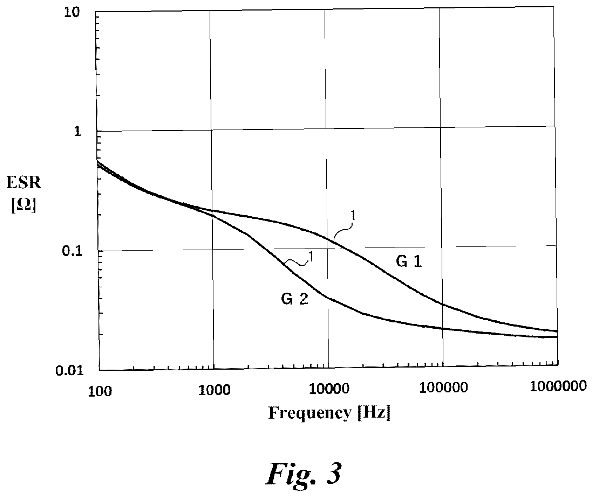

The ESR of the solid electrolytic capacitor of the example 2 with the foil capacity of the cathode foil of 150 µF/cm² and the ESR of the solid electrolytic capacitor of the example 5 with the foil capacity of the cathode foil of 20 µF/cm² were measured while changing the measurement frequency from 100 Hz to 1000 kHz. The measurement results are shown in Fig. 3. Fig. 3 is a logarithmic graph indicating the relationship between the ESR and the frequency of the solid electrolytic capacitors with the foil capacity of the cathode foil of 150 µF/cm² and 20 µF/cm², in which the cathode body included the conductive layer of TiC, the conductive polymer was attached using the conductive polymer solution, and the electrolytic solution was used together.

In Fig. 3, the example 5 in which the foil capacity Cp was 20 µF/cm² is indicated by the logarithmic graph G1, and the example 2 in which the foil capacity Cp was 150 µF/cm² is indicated by the logarithmic graph G2.

As indicated in Fig.3, the bump region 1 had occurred in the range of 1 kHz or more, including 100 kHz. Regarding this bump region 1, there was less bump in the logarithmic graph G2 than the logarithmic graph G1. That is, it was observed that the bump region 1 was eliminated and the ESR decreased as the foil capacity Cp of the cathode foil became larger.

Furthermore, in the frequency band in which the magnitude 1/(2πfCp) [|Zp|] of the impedance caused by the foil capacity Cp of the cathode foil was the resistance Rp > |Zp| in the logarithmic graph, it was observed that the ESR changes so as to follow the change in the magnitude of the impedance. Therefore, it was observed that the decrease in the ESR that had slowed down due to the occurrence of the bump region 1 greatly returned following the magnitude of the impedance. That is, it was observed that the bump region 1 tends to be eliminated.

Then the magnitude of the impedance was |Zp| = 1/(2πfCp), and when the foil capacity Cp of the cathode foil was made larger, the frequency that achieved the resistance Rp > |Zp| became smaller. It was observed that, at the frequency of 100 kHz, the ESR reduction effect due to the foil capacity Cp of the cathode foil in parallel with the resistance Rp significantly appeared at 20 µF/cm² or more.

### (Examples 8 to 12)

Solid electrolytic capacitors of examples 8 to 12 and the comparative example 2 were manufactured as follows. In the examples 1 to 5, the conductive layer containing titanium carbide TiC was laminated on the cathode foil, whereas in the examples 8 to 12 and the comparative example 2, the conductive layer containing titanium nitride TiN was laminated on the cathode foil. The solid electrolytic capacitors of the examples 8 to 12 were produced with the same structure, the same composition, the same manufacturing method, and the same condition as those of the examples 1 to 5, except for the type of the inorganic compound contained in the conductive layer.

The foil capacity of the cathode foil of the example 8 was 250 µF/cm², the foil capacity of the cathode foil of the example 9 was 150 µF/cm², the foil capacity of the cathode foil of the example 10 was 50 µF/cm², the foil capacity of the cathode foil of the example 11 was 40 µF/cm², and the foil capacity of the cathode foil of the example 12 was 20 µF/cm². Furthermore, the foil capacity of the cathode foil of the comparative example 2 was 10 µF/cm².

### (ESR measurement)

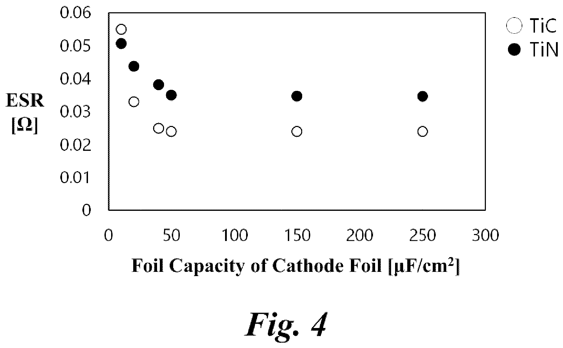

The ESR of the examples 8 to 12 and the comparative example 2 was measured. The measurement method and the measured condition of the ESR was the same as the example 1. The measurement result of the ESR are shown in the below table 3 with the foil capacity of each cathode foil. Furthermore, like in Fig. 4, a graph indicating the conductive layer of TiC series and TiN series created, in which the horizontal axis indicates the foil capacity of the cathode foil and the vertical axis indicates the ESR. In Fig. 4, the plot with white dots indicates TiC series and the plot with black dots indicates the TiN series.

**[Table 3]**

| | **Conductive Layer** | **Attachment of Conductive Polymer** | **Electrolytic Solution** | **Foil Capacity of Cathode Foil [µF/cm²]** | **100kHz ESR [Ω]** |
|---|---|---|---|---|---|
| **Example 1** | **TiC** | **Impregnation of Conductive Polymer Solution** | **Present** | **250** | **0.024** |
| **Example 2** | | | | **150** | **0.024** |
| **Example 3** | | | | **50** | **0.024** |
| **Example 4** | | | | **40** | **0.025** |
| **Example 5** | | | | **20** | **0.033** |
| **Comparative Example 1** | | | | **10** | **0.055** |
| **Example 8** | **TiN** | **Impregnation of Conductive Polymer Solution** | **Present** | **250** | **0.035** |
| **Example 9** | | | | **150** | **0.035** |
| **Example 10** | | | | **50** | **0.035** |
| **Example 11** | | | | **40** | **0.038** |
| **Example 12** | | | | **20** | **0.044** |
| **Comparative Example 2** | | | | **10** | **0.051** |

As shown in the table 3, also when the inorganic compound contained in the conductive layer had been TiN, as shown in the examples 8 and 12, it was observed that the ESR of the solid electrolytic capacitor was changed to decrease by increasing the foil capacity of the cathode foil in the range above 20 µF/cm² or more.

Furthermore, as shown in the table 3 and Fig. 4, it was observed that, when compared with the series of the examples 8 to 12 and the comparative example 2 containing TiN in the conductive layer, in the series of the examples 1 to 5 and the comparative example 1 containing TiC in the conductive layer, the ESR was higher when the foil capacity of the cathode foil was less than 20 µF/cm², but steeply decreased when the foil capacity of the cathode foil was 20 µF/cm² or more, better than the TiN series. By this, it was observed that when the conductive layer contained TiN and the foil capacity of the cathode foil was 20 µF/cm² or more, the ESR of the solid electrolytic capacitor particularly decreased.

### (Examples 13 to 37)

Solid Electrolytic capacitors of the examples 13 to 37 and the comparative examples 3 to 7 were produced. The solvent in the examples 13 to 37 and the comparative examples 3 to 7 were different from those in the series of the examples 1 to 5 and the comparative example 1. In the examples 1 to 5 and the comparative example 1, ethylene glycol was used for all amount of the solvent of the electrolytic solution.

In contrast, in the examples 13 to 17 and the comparative example 3, the solvent was formed of 25 wt% of ethylene glycol and 75 wt% of γ-butyrolactone. In the examples 18 to 22 and the comparative example 4, the solvent was formed of 10 wt% of ethylene glycol and 90 wt% of γ-butyrolactone. In the examples 23 to 27 and the comparative example 5, γ-butyrolactone was used for all amount of the of the electrolytic solution. In the examples 28 to 32 and the comparative example 6, the solvent is formed of 50 wt% of γ-butyrolactone and 50 wt% of sulfolane. In the examples 33 to 37 and the comparative example 7, sulfolane was used for all amount of the solvent of the electrolytic solution.

The foil capacity of the cathode foil was different in the examples 13 to 17 and the comparative example 3. The foil capacity of the cathode foil of the example 13 was 250 µF/cm², the foil capacity of the cathode foil of the example 14 was 150 µF/cm², the foil capacity of the cathode foil of the example 15 was 50 µF/cm², the foil capacity of the cathode foil of the example 16 was 40 µF/cm², and the foil capacity of the cathode foil of the example 17 was 20 µF/cm². Furthermore, the foil capacity of the cathode foil of the comparative example 3 was 10 µF/cm².

The foil capacity of the cathode foil was different in the examples 18 to 22 and the comparative example 4. The foil capacity of the cathode foil of the example 18 was 250 µF/cm², the foil capacity of the cathode foil of the example 19 was 150 µF/cm², the foil capacity of the cathode foil of the example 20 was 50 µF/cm², the foil capacity of the cathode foil of the example 21 was 40 µF/cm², and the foil capacity of the cathode foil of the example 22 was 20 µF/cm². Furthermore, the foil capacity of the cathode foil of the comparative example 4 was 10 µF/cm².

The foil capacity of the cathode foil was different in the examples 23 to 27 and the comparative example 5. The foil capacity of the cathode foil of the example 23 was 250 µF/cm², the foil capacity of the cathode foil of the example 24 was 150 µF/cm², the foil capacity of the cathode foil of the example 25 was 50 µF/cm², the foil capacity of the cathode foil of the example 26 was 40 µF/cm², and the foil capacity of the cathode foil of the example 27 was 20 µF/cm². Furthermore, the foil capacity of the cathode foil of the comparative example 5 was 10 µF/cm².

The foil capacity of the cathode foil was different in the examples 28 to 32 and the comparative example 6. The foil capacity of the cathode foil of the example 28 was 250 µF/cm², the foil capacity of the cathode foil of the example 29 was 150 µF/cm², the foil capacity of the cathode foil of the example 30 was 50 µF/cm², the foil capacity of the cathode foil of the example 31 was 40 µF/cm², and the foil capacity of the cathode foil of the example 32 was 20 µF/cm². Furthermore, the foil capacity of the cathode foil of the comparative example 6 was 10 µF/cm².

The foil capacity of the cathode foil was different in the examples 33 to 37 and the comparative example 7. The foil capacity of the cathode foil of the example 33 was 250 µF/cm², the foil capacity of the cathode foil of the example 34 was 150 µF/cm², the foil capacity of the cathode foil of the example 35 was 50 µF/cm², the foil capacity of the cathode foil of the example 36 was 40 µF/cm², and the foil capacity of the cathode foil of the example 37 was 20 µF/cm². Furthermore, the foil capacity of the cathode foil of the comparative example 7 was 10 µF/cm².

The solid electrolytic capacitors of the examples 13 to 37 were produced with the same structure, the same composition, the same manufacturing method, and the same condition as that of the example 1, except for the type of the solvent of the electrolytic solution.

### (ESR measurement)

The ESR of the examples 13 to 37 and the comparative examples 3 to 7 was measured. The measurement method and the measured condition of the ESR was the same as the example 1. The measurement result of the ESR are shown in the below table 4 to 8 with the foil capacity of each cathode foil. In the table, EG is ethylene glycol, BL is γ-butyrolactone, and TMS is sulfolane. In the table, the value in the brackets after the solvent species are the weight percent concentration in the solvent.

**[Table 4]**

| | **Conductive Layer** | **Attachment of Conductive Polymer** | **Solvent of Electrolytic Solution** | **Foil Capacity of Cathode Foil [µF/cm²]** | **100kHz ESR [Ω]** |
|---|---|---|---|---|---|
| **Example 13** | **TiC** | **Impregnation of Conductive Polymer Solution** | **EG (25)** | **250** | **0.024** |
| **Example 14** | | | | **150** | **0.024** |
| **Example 15** | | | | **50** | **0.024** |
| **Example 16** | | | **BL (75)** | **40** | **0.025** |
| **Example 17** | | | | **20** | **0.033** |
| **Comparative Example 3** | | | | **10** | **0.055** |

**[Table 5]**

| | **Conductive Layer** | **Attachment of Conductive Polymer** | **Solvent of Electrolytic Solution** | **Foil Capacity of Cathode Foil [µF/cm²]** | **100kHz ESR [Ω]** |
|---|---|---|---|---|---|
| **Example 18** | **TiC** | **Impregnation of Conductive Polymer Solution** | **EG (10)** | **250** | **0.026** |
| **Example 19** | | | | **150** | **0.026** |
| **Example 20** | | | | **50** | **0.026** |
| **Example 21** | | | **BL (90)** | **40** | **0.027** |
| **Example 22** | | | | **20** | **0.035** |
| **Comparative Example 4** | | | | **10** | **0.059** |

**[Table 6]**

| | **Conductive Layer** | **Attachment of Conductive Polymer** | **Solvent of Electrolytic Solution** | **Foil Capacity of Cathode Foil [µF/cm²]** | **100kHz ESR [Ω]** |
|---|---|---|---|---|---|
| **Example 23** | **TiC** | **Impregnation of Conductive Polymer Solution** | **BL (100)** | **250** | **0.029** |
| **Example 24** | | | | **150** | **0.029** |
| **Example 25** | | | | **50** | **0.029** |
| **Example 26** | | | | **40** | **0.031** |
| **Example 27** | | | | **20** | **0.040** |
| **Comparative Example 5** | | | | **10** | **0.067** |

**[Table 7]**

| | **Conductive Layer** | **Attachment of Conductive Polymer** | **Solvent of Electrolytic Solution** | **Foil Capacity of Cathode Foil [µF/cm²]** | **100kHz ESR [Ω]** |
|---|---|---|---|---|---|
| **Example 28** | **TiC** | **Impregnation of Conductive Polymer Solution** | **BL (50)** | **250** | **0.028** |
| **Example 29** | | | | **150** | **0.028** |
| **Example 30** | | | | **50** | **0.028** |
| **Example 31** | | | **TMS (50)** | **40** | **0.029** |
| **Example 32** | | | | **20** | **0.038** |
| **Comparative Example 6** | | | | **10** | **0.064** |

**[Table 8]**

| | **Conductive Layer** | **Attachment of Conductive Polymer** | **Solvent of Electrolytic Solution** | **Foil Capacity of Cathode Foil [µF/cm²]** | **100kHz ESR [Ω]** |
|---|---|---|---|---|---|
| **Example 33** | **TiC** | **Impregnation of Conductive Polymer Solution** | **TMS (100)** | **250** | **0.029** |
| **Example 34** | | | | **150** | **0.029** |
| **Example 35** | | | | **50** | **0.031** |
| **Example 36** | | | | **40** | **0.036** |
| **Example 37** | | | | **20** | **0.044** |
| **Comparative Example 7** | | | | **10** | **0.064** |

As shown in the tables 1 and 4, in the examples 1 to 5 and 13 to 17, the ESR of the solid electrolytic capacitor was 0.03 Ω when the foil capacity of the cathode foil was 20 µF/cm², and was 0.024 Ω when the foil capacity of the cathode foil was 50 µF/cm² or more. As shown in the tables 1 and 4 to 8, it can be seen that these ESR are one step lower than those of the examples 18 to 27 when the foil capacity of the cathode foil was equivalent.

In the examples 1 to 5 and the example 13 to 17, ethylene glycol of 25 wt% or more was contained in the solvent of the electrolytic solution. By this, it was observed that the ESR became better when ethylene glycol was contained in the amount of 25 wt% or more relative to the total solvent of the electrolytic solution.

Furthermore, as shown in the tables 6 to 8, compared to the examples 23 to 37, for each foil capacity of the cathode foil, the ESR of the examples 28 to 32 was one step lower than those of the examples 23 to 27 and 33 to 37.

In the examples 28 to 32, the solvent of the electrolytic solution was formed by both γ-butyrolactone and sulfolane. By this, it was observed that the ESR of the solid electrolytic capacitor could be reduced by forming the solvent with both γ-butyrolactone and sulfolane rather than forming the solvent only with γ-butyrolactone or sulfolane.

### REFERENCE SIGN

- 1:: bump region
- 21:: pit
- 22:: uncontacted region
- 31:: conductive layer region
- 32:: conductive polymer region
- 33:: cathode-side dielectric film

## Claims

1. A solid electrolytic capacitor, comprising:
an anode body formed of valve action metal and having dielectric film;
a cathode body including cathode foil formed of valve action metal and a conductive layer formed on the cathode foil; and
an electrolyte layer intervening between the anode body and the cathode body and including a conductive polymer which contacts to at least the conductive layer,
wherein the cathode foil has foil capacity of 20 µF/cm² or more.

2. The solid electrolytic capacitor according to claim 1, wherein the cathode foil has an etching layer formed by etching pits and dielectric film formed on a surface of the cathode foil.

3. The solid electrolytic capacitor according to claim 2, wherein all or a part of the etching pits have a region where the conductive layer does not contact at a deep portion thereof.

4. The solid electrolytic capacitor according to claim 3, the conductive layer is a vapor-deposited layer at least contacting the cathode foil.

5. The solid electrolytic capacitor according to any one of claims 1 to 4, wherein the conductive layer contains titanium carbide.

6. The solid electrolytic capacitor according to any one of claims 1 to 4, wherein the electrolyte layer is formed so that solution of the conductive polymer or the conductive polymer in dispersion is attached thereto.

7. The solid electrolytic capacitor according to any one of claims 1 to 4, the cathode foil has the foil capacity of 250 µF/cm².

8. The solid electrolytic capacitor according to any one of claims 1 to 4, wherein the electrolyte layer includes electrolytic solution.

9. The solid electrolytic capacitor according to claim 8, wherein the electrolytic solution contains ethylene glycol of 25 wt% or more relative to a total solvent of said electrolytic solution.

10. The solid electrolytic capacitor according to claim 8, wherein the electrolytic solution is formed by both γ-butyrolactone and sulfolane.

11. A manufacturing method of a solid electrolytic capacitor, comprising:
a cathode body formation process of forming a cathode body by forming a conductive layer on cathode foil formed of valve action metal and with foil capacity of 20 µF/cm²; and
an electrolyte layer formation process of forming an electrolyte layer intervening between an anode body having dielectric film and the cathode body, and including a conductive polymer which contacts to at least a conductive polymer.
